# EUROPEAN PATENT APPLICATION

(11) **EP 1 821 169 A2**
(43) Date of publication of application: **22.08.2007**
(21) Application number: 07102452.5
(22) Date of filing: 15.02.2007
(51) Int. Cl.: G05B 19/409

(54) **Numerical controller**

(30) Priority: 16.02.2006 JP 2006039547
(71) Applicant: FANUC LTD, Minamitsuru-gun, Yamanashi 401-0597 (JP)
(72) Inventor: Maeda, Hideaki ,FANUC Manshonharimomi,3511-1, Yamanashi 401-0511 (JP); Nakamura, Shinya ,FANUC Manshonharimomi,3511-1, Yamanashi 401-0511 (JP); Nagayama, Susumu, Yamanashi 403-0005 (JP)
(74) Representative: Billington, Lawrence Emlyn

(57) **Abstract**

A numerical controller (100) in which similar icons are created without applying major load onto a memory (14). Among icon definition data displayed in areas F1..., G1..., H1..., on frames A, B and C, the data that can be expressed by conversions, such as rotation, horizontal mirror image, vertical mirror image, horizontal-and-vertical mirror image, magnification/contraction retaining horizontal/vertical ratio, magnification/contraction varying horizontal/vertical ratio, black/white reversal, display in red, blue, yellow and green, with respect to one parent icon, are substituted with data indicating the conversion contents. It is possible to display many icons with a small storage capacity. The definition data of each icon can be previously written in a ROM (12) and copied to a RAM (13) when the power is turned on to be used for display.

## Description

### BACKGROUND OF THE INVENTION

### 1. Field of the Invention

The present invention relates to a numerical controller, and more specifically to a numerical controller having a display device on which various icons are displayed.

### 2. Description of Related Art

It is well known to display various icons on a screen of a display device provided in various types of information processing devices, control devices and the like, to select a necessary icon by an operator's making a click or the like with the mouse, and to make the device perform the data processing, screen display, communication, and the like, corresponding to the selected icon. Such icons have been also used in a numerical controller employed to control a machine tool and the like (see JP 10-31510A, for example).

In recent years, functions of numerical controllers have become complicated, and accordingly, there has been a tendency that the number of types of icons is increased. In conventional art, when a plurality of similarly designed icons, for example, icons identical in pattern but different in facing direction (position), size, display color and the like are displayed, it is required to secure a large quantity of memory (storage capacity) because icon data is maintained in a memory with respect to each icon.

### SUMMARY OF THE INVENTION

The present invention provides a numerical controller capable of displaying a plurality of similarly designed icons by preparation of a small amount of data by performing various kinds of conversions with respect to one piece of icon data.

A numerical controller of the present invention has a function of selectively displaying one of different frames, each including at least one icon display area, on a display screen. The numerical controller comprises: storage means storing icon definition data for defining different icons, and icon designation data for designating ones of the different icons to be respectively displayed in the icon display areas of the different frames, the different icons including a child icon to be acquired by subjecting a parent icon that is another of the different icons to one of conversions of changing display configuration, changing a display size and changing a display color, and the icon definition data for the child icon including designation of a parent icon of the child icon and contents of the one of the conversions to which the parent icon is to be subjected; determining means for determining one of the different icons to be displayed in each icon display area of selected one of the different frames according to the icon designation data stored in the storage means, and reading icon definition data of each of the determined icons from the storage means; and displaying means for displaying each of the icons determined to be displayed in the corresponding icon display area of the selected frame based on the icon definition data determined by the determining/reading means, wherein the displaying means displays the child icon by subjecting the parent icon of the child icon to the one of the conversions according to the designations in the icon definition data for the child icon.

The changing of display configuration of the parent icon includes rotation (less than 360 degrees), horizontal mirror image, vertical mirror image, and horizontal-and-vertical mirror image, etc. The changing of display size of the parent icon includes magnification/contraction retaining horizontal/vertical ratio, magnification/contraction varying horizontal/vertical ratio, etc. The changing of display color includes black/white reversal, tone adjustment, etc.

The numerical controller may further comprise input means for an operator to designate the icon definition data for the child icon. The storage means may comprise a ROM storing the icon definition data.

With the numerical controller according to the present invention, if a plurality of icons to be used include an icon group (icon family) of similarly designed icons, it is possible to save a memory capacity required for icon display and to display many icons after preparation of a small amount of data.

### BRIEF DESCRIPTION OF THE DRAWINGS

FIG. 1 is a block diagram of a numerical controller that controls a machine tool to which the present invention is applied;
FIG. 2 is a view schematically showing storage areas of a memory in an embodiment;
FIG. 3 is a view showing a data input frame for icon conversion in the embodiment;
FIGS. 4a to 4f are views showing examples of icons created by subjecting icons selected in FIG. 3 to "rotation", "horizontal mirror image", "vertical mirror image", "horizontal-and-vertical mirror image", "magnification/contraction retaining horizontal/vertical ratio", and "magnification/contraction varying horizontal/vertical ratio", respectively;
FIGS. 5a to 5c are views showing examples of display frames of frames A, B and C; and
FIG. 6 is a flowchart showing an example of processing that is implemented for icon display at the time of frame selection.

### DETAILED DESCRIPTION

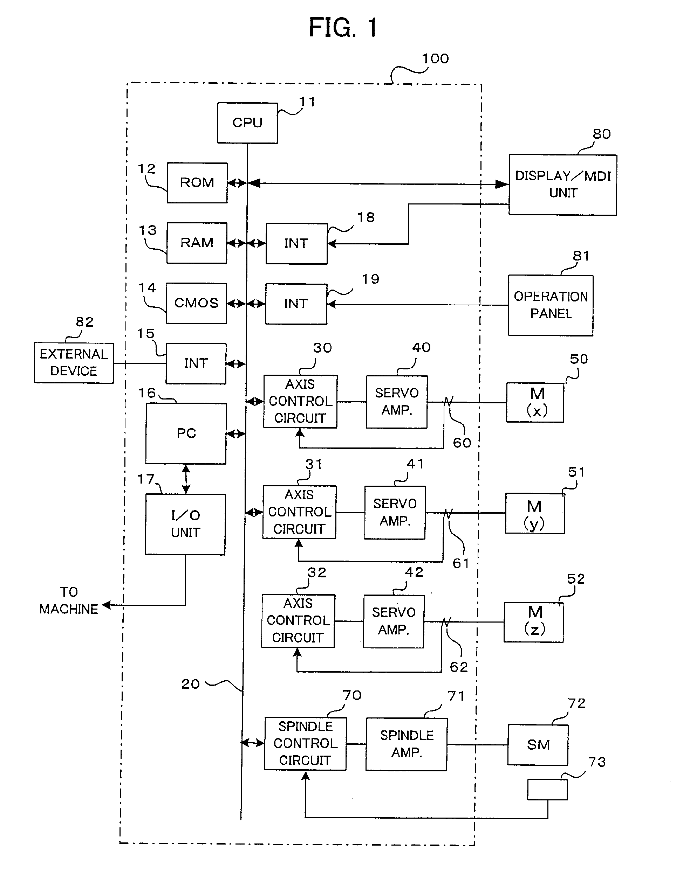

FIG. 1 shows a general block configuration of a numerical controller that controls a machine tool. Hereinafter, an embodiment will be described, taking application of the present invention to the numerical controller as an example. First, the outline of the entire configuration will be described below.

In FIG. 1, the entire numerical controller is denoted by reference numeral 100. A CPU 11 is a processor that controls the numerical controller 100 as a whole. The CPU 11 reads out a system program stored in an ROM 12 through a bus 20, and controls the entire controller according to the system program. An RAM 13 stores temporary calculation data, display data, and various kinds of data entered by an operator through a display/MDI unit 80. A CMOS memory 14 is backuped by a battery, not shown, and is constructed as a nonvolatile memory in which a storage state is maintained even if the power of the controller 100 is switched off.

A CMOS memory 14 stores a machining program that is read in through an interface 15, a machining program that is entered through the display/MDI unit 80, etc. In the present embodiment, there are secured (a) previously prepared icon data, (b) a date input frame for selection of an icon definition data for the child icon, and (c) a memory area for storing a program for converting icon data, related parameters, etc., in accordance with an aspect described below. The CMOS memory 14 may be replaced with a nonvolatile memory of another type.

Various kinds of system programs for implementing processing of an edit mode required for creation and edit of the machining program and processing for automatic operation are previously written in the ROM 12.

The interface 15 enables a connection between the controller 100 and an external device 82 such as an adapter. The machining program and the like are read in from the external device 82 side. The machining program that is edited in the controller 100 can be stored in external storage means through the external device 82. A PC (programmable controller) 16 outputs a signal through an I/O unit 17 to an assist device of the machine tool (for example, an actuator such as a robot hand for tool change) according to a sequence program that is built-in in the controller 100, thereby controlling the assist device.

The display/MDI unit 80 is a manual data input device equipped with a mouse (pointing tool) in addition to a display and a keyboard. An interface 18 receives commands and data from the keyboard of the display/MDI unit 80 and transmits them to the CPU 11. An interface 19 is connected with an operation panel 81 installed in a main body of the machine tool. The operation panel 81 is provided with an alarm device and an alarm lamp, and is further provided with various switches for entering various commands to the machine tool.

Axis control circuits 30 to 32 of axes receive motion command amounts of the respective axes from the CPU 11, and outputs commands of the respective axes to servo amplifiers 40 to 42. Upon receipt of the commands, the servo amplifiers 40 to 42 drive servomotors 50 to 52 of the axes of X, Y and Z. Each of the servomotors 50 to 52 of the axes has a built-in position/velocity detector, and feedbacks a position/velocity feedback signal from the position/velocity detector to the axis control circuits 30 to 32, thereby carrying out position/velocity feedback control.

Drive currents outputted from the servo amplifiers 40 to 42 to the respective servomotors 50 to 52 are also detected by current detectors 60 to 62 as in conventional art, and are feedbacked to the respective axis control circuits 30 to 32, and current (torque) control is then carried out. With respect to each of the motors, the drive current flowing through the motor and load torque applied to the motor or thrust load of a feed axis that is driven by the motor are virtually the same. Therefore, in the present embodiment, means for detecting the thrust load applied to the tool is constructed by using the current detector 62 for detecting the drive current flowing through the servomotor 52 for driving a Z axis which is used for tool feeding. Illustration of the position/velocity feedback will be omitted.

A spindle control circuit 70 receives a spindle rotation command and implements velocity control based upon command velocity and a feedback signal from a position coder 73 that generates feedback pulses in sync with rotations of a spindle motor 72 supplied with drive current from a spindle amplifier 71. The spindle control circuit 70 further receives a current feedback signal from a current detector 74 detecting the drive current flowing through the spindle motor 72, and implements current loop control, to thereby control rotational velocity of the spindle motor 72. Load (torque) applied to the spindle motor is substantially proportional to the drive current. For this reason, in the present embodiment, means for detecting the load (torque) applied to the spindle motor is constructed by the current detector 74.

The above-mentioned configuration and functions of the numerical controller are basically the same as a conventional numerical controller. However, there are the following differences in display and conversion of icons, and the like.

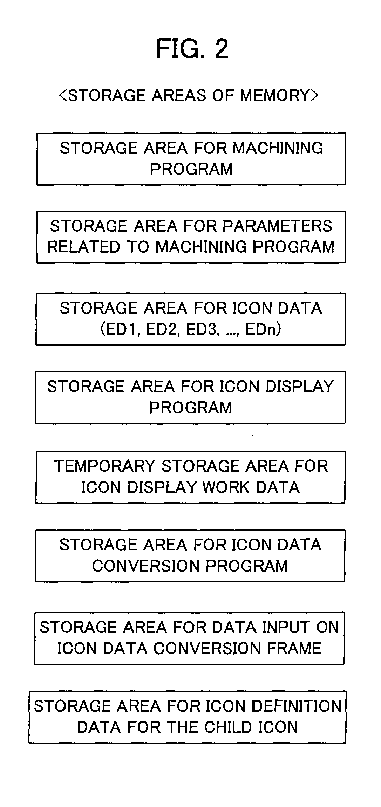

First, for the purpose of storing (a) the previously prepared icon data, (b) the date input frame for selection of an icon definition data for the child icon, (c) the program for converting the icon data, related parameters, etc., in addition to a machining program storage area and the like, there are provided storage areas listed below in the CMOS memory (or a nonvolatile memory of another type) 14, for example, as shown in FIG. 2.
● Storage area for icon data
● Storage area for icon display program data
● Temporary storage area for displaying icons
● Storage area for icon data conversion program
● Storage area for data input frame for icon data conversion
● Storage area for icon definition data for the child icon

In the icon data storage area, icon data ED1, ED2, ED3, ..., EDₙ indicating multiple kinds of icons are stored beforehand. In conventional art, among these pieces of data is temporally copied in the temporary storage area for work data for displaying icon and is displayed in the icon display area (for example, bottom of the frame; an example is described below) of the display of the display/MDI unit 80 according to an icon display program stored in the storage area for icon display program data. The displayed icons are used for various operations of the numerical controller, edit of the machining program, and the like, according to a well-known aspect.

In the present embodiment, apart from the display of the previously prepared icons, it is possible to subject the icon data ED1, ED2, ED3, ..., EDₙ to various kinds of conversions and to display icons indicated by the converted icon data. To this end, program data of icon data conversions is stored in the storage area for program data of icon data conversions shown in FIG. 2. As icon data conversions, the following matters are included.
(1) Rotation
(2) Horizontal mirror image
(3) Vertical mirror image
(4) Horizontal-and-vertical mirror image
(5) Size variation
(6) Color variation

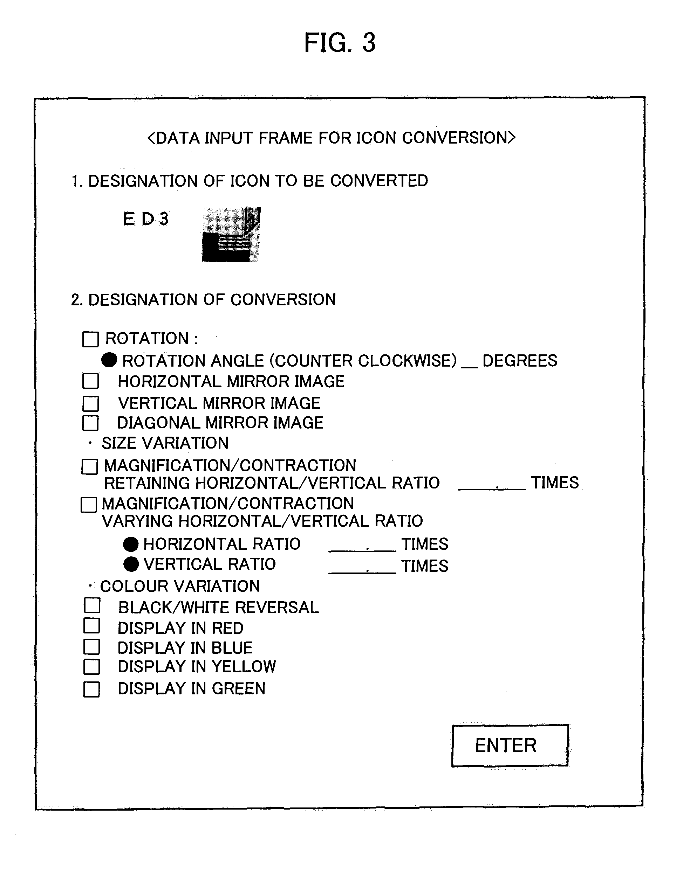

It is possible to designate which one of the above conversions is to be carried out, and as for (1), (5) and (6), what specific conversion conditions are to be set, by calling on the screen a "data input frame for conversion", for example, as shown in FIG. 3, and then doing a click on a necessary point, data writing and the like on the frame. Data of processing required for the call and display of the data input frame and the input on screen, etc. are previously stored in the "storage area for data related to data input on screen for icon data conversions".

On the frame, an icon to be converted is first designated under item 1. The icon to be converted is selected from options of unconverted icons on an icon list, not shown, based upon an icon definition data for the patent icon (accumulation of icon data) of the icon data storage area. The selected icon is displayed under item 1 as shown by the example in the figure.

Secondly, one of conversion menu items provided with □ marks is selected (click, keyboard operation or the like). The following are separate brief descriptions of each of the conversion menu items.
○ Case in which "rotation" is selected;

Rotation angle is further designated. To designate the angle, for example, counterclockwise angle is designated on a one-degree basis in a range of from 1 degree to 359 degrees, and an execution key is pressed (clicked or the like; the same shall apply hereinafter). The CPU (see FIG. 1) 11 implements rotation conversion processing by using a required portion of the program data stored in the storage area for program data of icon data conversions (portion required for the rotation conversion processing). Since the processing of rotating a graphic is well known per se, details will be omitted.

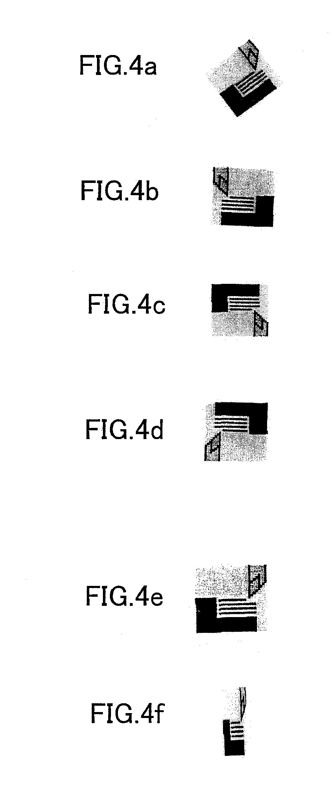

As an example, if the conversion is executed after designating the angle to be "45 degrees", icon data indicating the icon selected in FIG. 3 is converted into icon data indicating an icon shown in FIG. 4a. The converted icon data is stored in the temporary storage area for work data for displaying icon. Based upon this data, the icon display program stored in the storage area for icon display program data displays a converted icon in the icon display area (for example, bottom of the frame) on the display.

Conversion contents (label data for designating an unconverted icon, code data indicating "rotation", data of rotation angle, label data for designating a converted icon, date and time of execution of conversion, etc.) are stored in the storage area for icon definition data for the child icons. The label data for designating each of the icons is referred to as "icon ID" for definition.
○ Case in which "horizontal mirror image" is selected;

Once the execution key is pressed, conversion processing for horizontal mirror image is executed. Since the processing of making a horizontal mirror image of a graphic object is well known per se, details will be omitted. The icon shown in FIG. 3 is converted into an icon shown in FIG. 4b. The subsequent processing is the same as in the case of "rotation".

In other words, the converted icon data is stored in the temporary storage area for work data for displaying icon. Based upon this data, the icon display program stored in the storage area for icon display program data displays the converted icon in the icon display area (for example, bottom of the frame) on the display.

Conversion contents (the icon ID for designating the unconverted icon, code data indicating "horizontal conversion", the icon ID for designating the converted icon, date and time of execution of conversion, etc.) are stored in the storage area for icon definition data for the child icons.
○ Case in which "vertical mirror image" is selected;

Once the execution key is pressed, conversion processing for vertical mirror image is executed. Since the processing of making vertical image of a graphic object is well known per se, details will be omitted. The icon selected in FIG. 3 is converted into an icon shown in FIG. 4c. The subsequent processing is the same as in the case of "horizontal mirror image", so that it will not be repeated again. However, the data stored in the storage area for icon definition data for the child icons includes the icon ID for designating the unconverted icon, code data indicating "vertical conversion", the icon ID for designating the converted icon, and date and time of execution of conversion, etc.
○ Case in which "horizontal-and-vertical mirror image" is selected;

Once the execution key is pressed, conversion processing for horizontal-and-vertical mirror image is executed. Since the processing of making horizontal-and-vertical mirror image of a graphic object is well known per se, details will be omitted. The icon selected in FIG. 3 is converted into an icon shown in FIG. 4d. The subsequent processing is the same as in the case of "horizontal mirror image", so that it will not be repeated again. However, the data stored in the storage area for icon definition data for the child icons includes the icon ID for designating the unconverted icon, code data indicating "horizontal-and-vertical mirror image conversion", the icon ID for designating the converted icon, date and time of execution of conversion, etc.
○ Case in which "magnification/contraction retaining vertical/horizontal ratio" (magnification or contraction with vertical/horizontal ratio retained) is selected;

Furthermore, a degree of magnification/contraction retaining vertical/horizontal ratio is designated. The degree is designated, for example, on a 0.1-time basis in a range of from 0.1 times to 0.9 times (contraction) or from 1.1 times to 3.0 times (magnification), and the execution key is then pressed (1.0 times extraction or contraction is rejected from being designated). Subsequently, the CPU (see FIG. 1) 11 implements the rotation conversion processing by using a required portion of the program data that is stored in the storage area for program data of icon data conversions (required for the magnification/contraction processing retaining horizontal/vertical ratio). Since the processing of magnifying/contracting a graphic object retaining horizontal/vertical ratio is well known per se, details will be omitted.

For instance, if 1.2 times magnification is designated, the icon selected in FIG. 3 is converted into an icon that is magnified by 1.2 times both vertically and horizontally as shown in FIG. 4e. The subsequent processing is the same as in the cases of the foregoing conversions, so that it will not be repeated. However, the data stored in the storage area for icon definition data for the child icons includes the icon ID for designating the unconverted icon, code data indicating "magnification/contraction retaining horizontal/vertical ratio", data indicating the degree of the magnification/contraction retaining horizontal/vertical ratio, the icon ID for designating the converted icon, date and time of execution of conversion, etc.
○ Case in which "magnification/contraction varying horizontal/vertical ratio" (magnification/contraction at different vertical/horizontal ratio) is selected;

Furthermore, horizontal and vertical ratios are designated. The ratios are designated, for example, on a 0.1-time basis in a range of from 0.1 times to 3.0 times, and the execution key is then pressed (horizontal ratio = vertical ratio is rejected from being designated). Subsequently, the CPU (see FIG. 1) 11 implements the rotation conversion processing by using a required portion of the program data stored in the storage area for program data of icon data conversions (required for the magnification/contraction processing varying horizontal/vertical ratio). Since the processing of magnifying/contracting a graphic object varying horizontal/vertical ratio is well known per se, details will be omitted.

For instance, if the horizontal ratio is designated at 0.5 times, and the vertical ratio at 1.5 times, the icon selected in FIG. 3 is converted into an icon reduced in horizontal size by 0.5 times and increased in vertical size by 1.5 times as shown in FIG. 4f. The subsequent processing is the same as in the cases of the foregoing conversions, so that it will not be repeated. However, the data stored in the storage area for icon definition data for the child icon includes the icon ID for designating the unconverted icon, code data indicating "magnification/contraction conversion varying horizontal/vertical ratio", data indicating the vertical and horizontal ratios, the icon ID for designating the converted icon, date and time of execution of conversion, etc.
○ Case in which any one of black/white reversal, display in red, display in blue, display in yellow, and display in green is selected;

Once the execution key is pressed, the selected conversion processing is executed. The processing of applying the black/white reversal or display in a certain color to the display color of a graphic is well known per se, so that details will be omitted. Illustration of a concrete example before and after conversion will be omitted. Similarly to the above-mentioned examples, the designated icon is converted into an icon subjected to the designated color variation (black/white reversal or display in red, blue, yellow or green). The subsequent processing is the same as the cases described above, so that it will not be repeated. However, the data stored in the storage area for icon definition data for the child icon includes the icon ID for designating the unconverted icon, code data indicating the "designated color variation (any one of black/white reversal and display in red, blue, yellow and green)", the icon ID for designating the converted icon, date and time of execution of conversion, etc.

In each of the above-mentioned conversions, the icon ID for designating the converted icon may be created by the operator on the screen or may be automatically created by a proper program. For instance, one idea is to label with EDᵢⱼ a j-th icon that is created by carrying out a conversion of an i-th icon EDᵢ previously prepared in the icon data storage area.

No matter which conversion is carried out according to the foregoing aspect, it is not necessary to save the converted icon data itself as long as conversion contents are stored in the storage area for icon definition data for the child icon. Only if the converted icon is required to be displayed on the screen, the conversion content is read out from the storage area for icon definition data for the child icon, and the icon data (before conversion) designated therein is read out from the icon data storage area. Then, the conversion is re-executed. By so doing, it is possible to display the "converted icon" as needed.

Stated differently, the storage of the converted icon can be substituted with the storage of data of the conversion content, and simply requires a storage capacity that is still smaller than the storage of icon data expressing a pattern of the converted icon. Consequently, even if a large number of icons are created by conversion, and the data of conversion contents is stored, the memory is not applied with major load.

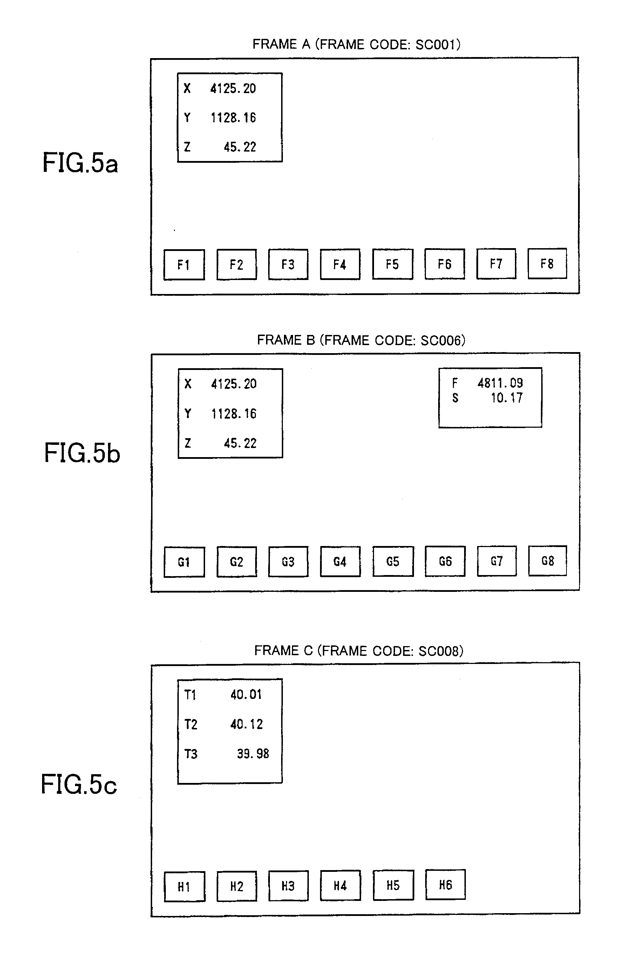

Next, a mode of use of conversion content data that is created in connection with the conversion of icons as stated above will be described with reference to an example. In the numerical controller, icons to be displayed are often determined with respect to each frame. For example, as shown in FIGS. 5a to 5c, icons are displayed in a form where a frame A displays icons (illustration of patterns is omitted) corresponding to icon display areas (hereinafter, also simply referred to as "areas") F 1 to F8 in the respective areas; another frame B displays icons corresponding to areas G1 to G8 in the respective areas; and still another frame C displays icons corresponding to areas H1 to H6 in the respective areas.

In the case of FIGS. 5, according to conventional art, it is required to previously store and prepare icon data that individually expresses every icon counted avoiding overlapping icons (icons identical all in display configuration of a display pattern, size, display color, and the like) among the icons displayed in the areas F1 to F8, G1 to G8, and H1 to H6. For instance, if an equation F1=G3=H6 (icons expressed by the same definition data) is satisfied, and the other icons are all different from each other, the icon data that individually expresses the patterns of twenty icons has to be prepared beforehand.

In contrast, according to the present invention, as long as the conventional icon data (icon definition data capable of expressing patterns) is previously prepared for one icon included in a group of icons (hereinafter, referred to as "icon family") having the above-mentioned analogous relationship with each other even if the icons are not identical, as to the other icons that belong to the same icon family, it is possible to substitute data containing a small amount of information. In the following description, an icon for which the conventional icon definition data is previously prepared is referred to as "parent icon", and an icon created by converting the "parent icon" through any one of the foregoing conversions is referred to as "child icon".

As is apparent from the description of the embodiment, with respect to each child icon, it is possible to store a conversion content (data for designating an icon ID of the parent icon corresponding to the child icon and the conversion content (classification code of the conversion, a parameter for describing the conversion content; for example, rotation angle if the conversion content is rotation), an icon ID for designating the child icon, etc.) in the storage area for icon definition data for the child icon. These pieces of data can be used as definition data of each child icon.

Here, with respect to the icons to be displayed in the areas F 1 to F8, G1 to G8, and H1 to H6 shown in FIGS. 5a to 5c, various relationships listed below (coincidence relationship, family relationship, and corresponding relationship between a list of the other independent icons and icon IDs) are assumed.
[Coincidence relationship];
● IDs of the icons to be displayed in F1, G3 and H6 are all ED1 [Family relationship];
● ID of the icon to be displayed in area F4 is ED3
● Child icons derived from the icon ED3 as a parent icon;
· IDs of the icons to be displayed in G6 and H2=ED302
· IDs of the icons to be displayed in G7 and H3=ED305
[Other icons];

A relationship between the areas and the respective icon IDs to be displayed can be shown with = as follows:
· F2=ED2
· F3=ED5
· F5=ED9
· F6=ED8
· F7=ED6
· F8=ED7
· G1=ED11
· G2=ED16
· G4=ED17
· G5=ED18
· G8=ED19
· H1=ED24
· H4=ED27
· H5=ED25

Here, icon ID=ED302 indicates that each of the icons displayed in G6 and H2 is an icon obtained by subjecting the ED3 (displayed in =F4) to the conversion of horizontal mirror image (that is, icon shown in FIG. 4b).

The icon ID=ED305 indicates that each of G7 and H3 is an icon obtained by magnifying the ED3 (icon displayed in =F4) by 1.2 times retaining horizontal/vertical ratio (see FIG 4e).

In this case, as to the child icon ED302, if the code data indicating the "horizontal conversion" and the icon ID (ED3) for designating the parent icon are stored in the storage area for icon definition data for the child icon according to the above-described procedure (data input on screen), they can be used as definition data for displaying icons in the areas G6 and H2.

In the same manner, as to the child icon ED305, if the code data indicating the "magnification/contraction retaining horizontal/vertical ratio" and the parameter 1.2 indicating the ratio, and the icon ID (ED3) for designating the parent icon are stored in the storage area for icon definition data for the child icon according to the foregoing procedure (data input on screen), it can be used as definition data for indicating the icons G7 and H3. As to the rest of the icons, conventional definition data is previously stored in the icon data storage area (see FIG. 2).

Accordingly, for actual display on each frame, if the corresponding relationship is previously stored (for example, stored in the CMOS 14), it is possible to read out necessary icon definition data and to display the required icons according to a selected frame. For instance, when the frame B is to be displayed, as to the areas G1, G2, G4, G5 and G8, the definition data (pattern expression data) of ED 11, ED 16, ED 17, ED 18 and ED 19 may be read out and displayed by using the icon display program. As to the area G3, in the same manner as in the case of the area F1, the definition data (pattern expression data) of ED 1 may be read out and displayed.

As to the area G6, the definition data of ED302 is read out from the storage area for icon definition data for the child icon. According to the conversion content designated therein (horizontal mirror image with respect to ED3), the program of icon data conversions is activated, and the designated conversion is carried out, to thereby display the icon G6 in the frame B by using the icon display program.

Furthermore, as to the area G7, the definition data of ED305 is read out from the storage area for icon definition data for the child icon. According to the conversion content designated therein (1.2 times magnification retaining horizontal/vertical ratio with respect to ED3), the program of icon data conversions is activated to implement the designated conversion, to thereby display the icon G7 in the frame B by using the icon display program. As described above, it is possible to display all the necessary areas G1 to G8 in the frame B. Needless to say, in case that the frame C is selected, it is possible to display the icons H1 to H6 according to the same procedure.

In the explanation above, the child icons (ED302, 305 and the like in the example) are created by the operator's (user's) designating the conversion contents through data input on screen. However, it is also possible to employ a method in which a condition corresponding to a state where the operation of creation is completed is prepared beforehand. If this method is employed, many pieces of necessary data are previously written in the ROM 12. In the foregoing assumed case, the data previously written in the ROM 12 includes the following matters.
(1) Frame ID of each frame. For example, the frame ID of the frame A is set as SC001, that of the frame B as SC006, and that of the frame C as SC008.
(2) Data for designating icon display areas with respect to each frame ID. In the case of the above example, data for designating the areas F1 to F8 with respect to the frame A (SC001), the areas G1 to G8 with respect to the frame B (SC006), and the areas H1 to H6 with respect to the frame C (SC008).
(3) Icon ID of an icon to be displayed in each of the areas on each frame.
   In the case of the above example, the icon IDs are as follows (the corresponding relationship between each of the areas and the corresponding icon ID to be displayed is shown by =).
   [Frame A];
      · F1=ED1
      · F2=ED2
      · F3=ED5
      · F4=ED3
      · F5=ED9
      · F6=ED8
      · F7=ED6
      · F8=ED7
   [Frame B];
      · G1=ED11
      · G2=ED16
      · G3=ED1
      · G4=ED17
      · G5-ED18
      . G6=ED302
      · G7=ED305
      · G8=ED19
   [Frame C];
      · H1=ED24
      · H2=ED302
      · H3=ED305
      · H4=ED27
      · H5=ED25
      · H6=ED1
(4) Definition data of an icon indicated by each of the icon IDs (icon data);
   As mentioned, the icon definition data includes (a) data in a conventional form (expressing patterns) and (b) data for describing the conversion contents. The latter is used for child icons, to thereby suppress the consumption of the storage capacity. The following data is included in the above-mentioned assumed case.
   **●** Icons in which the definition data of (a) type is written in the ROM ED1, ED2, ED3, ED5, ED6, ED7, ED8, ED9, ED11, ED16, ED17, ED18, ED 19, ED24, ED25 and ED27
   ● Icons in which the definition data of (b) type is written in the ROM ED302 and ED305
   In addition, the definition data of the icons includes classification codes, that is, the type (a)= no conversion required, and (b)= conversion required.
(5) Program data for copying the data (1) to (4) written in the ROM 12 to the RAM 13 when the power is turned on

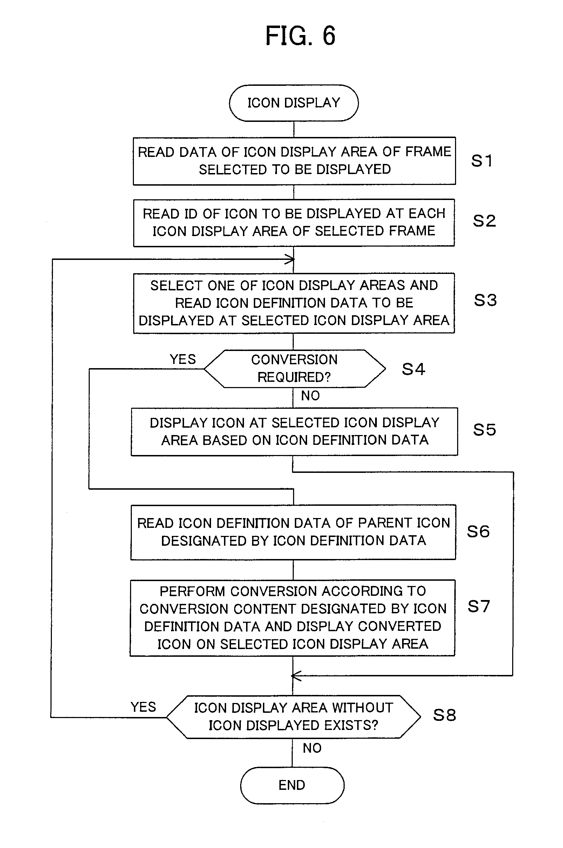

When the data (1) to (5) are written in the ROM 12, if the power of the numerical controller is switched on, the data (1) to (4) are copied to the RAM 13 due to the data (5). In this state, in order to display the required icons at the time of frame selection (at the time of switching to a frame with a different frame ID), for example, processing shown in a flowchart of FIG. 6 is carried out. A key point of each step will be described below.
● Step S 1; The data for designating the icon display areas for a frame ID of the frame selected to be displayed are read. For example, when the selected frame is the frame B (frame ID=SC006), the data indicating the areas G1 to G8 are read.
● Step S2; The ID data of the icon to be displayed in each of the icon display areas of the selected frame are read. For example, when the selected frame is the frame B, the corresponding relationships (the corresponding relationships of G1=ED 11, G2=ED16, G3=ED1, G4=ED 17, G5=ED18, G6=ED302, G7=ED305 and G8=ED19) are read.
● Step S3; one of areas where icons are not displayed is designated according to an appropriate rule (for example, areas located on more left side of the frame are more preferentially designated) is designated (for example, in the frame B, the leftmost area among the areas displaying no icon in the areas G1 to G8 is designated). According to the corresponding relationships that are read in Step S2, the definition data of the icon ID corresponding to the designated area is read out. For instance, if the area G2 is designated on the frame B, the definition data of ED16 is read out. If the area G7 is designated on the frame B, the definition data of ED305 is read out.
● Step S4; It is determined whether the icon definition data read in Step S3 is the type (a)= no conversion required or (b)= conversion required. This judgment is carried out based upon the classification codes. If it is judged that no conversion is required (data is not a child icon), the procedure advances to Step S5. If it is judged that conversion is required (data is a child icon), the procedure moves to Step S6.
● Step S5; The icon is displayed in the corresponding area based upon the icon definition data (the (a) type) read out in Step S3, and the procedure advances to Step S8.
● Step S6; The icon definition data (the (a) type) of the parent icon designated by the icon definition data (of the child icon) read in Step S3 are read. For instance, if the child icon is ED302 (displayed in G6 of the frame B or in H2 of the frame C), the icon definition data (the (a) type) of ED4 that is the parent icon of the child icon ED302 is read out.
● Step S7; The conversion is performed according to the conversion content designated by the icon definition data (of the child icon) read in Step S3, to thereby display the converted icon. For instance, when the selected frame is the frame B and the child icon is ED302 to be displayed in G6, ED3 is subjected to the conversion of horizontal mirror image and is then displayed in the area G6. The procedure then proceeds to Step S8.
● Step S8; It is determined whether an icon display area without icon displayed exists or not in the current frame. If so, the procedure returns to Step S3. If not, the procedure is ended.

By carrying out the above-described procedure, the various icons required in the current frame are displayed in the respective given areas.

## Claims

1. A numerical controller having a function of selectively displaying one of different frames, each including at least one icon display area, on a display screen, said numerical controller comprising:
storage means for storing icon definition data for defining different icons, and icon designation data for designating ones of the different icons to be respectively displayed in the icon display areas of the different frames, said different icons including a child icon to be acquired by subjecting a parent icon that is another of the different icons to one of conversions of changing display configuration, changing a display size and changing a display color, and said icon definition data for the child icon including designation of a parent icon of the child icon and contents of the one of the conversions to which the parent icon is to be subjected;
determining means for determining one of the different icons to be displayed in each icon display area of selected one of the different frames according to the icon designation data stored in said storage means, and reading icon definition data of each of the determined icons from said storage means; and
displaying means for displaying each of the icons determined to be displayed in the corresponding icon display area of the selected frame based on the icon definition data determined by said determining/reading means, wherein said displaying means displays the child icon by subjecting the parent icon of the child icon to the one of the conversions according to the designations in the icon definition data for the child icon.

2. A numerical controller according to claim 1, further comprising input means for an operator to designate the icon definition data for the child icon.

3. A numerical controller according to claim 1, wherein said storage means comprises a ROM storing the icon definition data.
